# FASCICULE DE BREVET EUROPEEN

(11) **EP 0 847 338 B1**
(45) Date de publication et mention de la délivrance du brevet: **14.11.2001**
(21) Numéro de dépôt: 96930194.4
(22) Date de dépôt: 30.08.1996
(51) Int. Cl.: B60L 11/18, H02J 7/02

(54) **SYSTEME D'ALIMENTATION ELECTRIQUE MIXTE ONDULEUR ET CONVERTISSEUR ALTERNATIF-CONTINU**
ELEKTRISCHES NETZTEIL MIT GEMISCHER ANORDNUNG VON WECHSELRICHTER UND WECHSELSTROM-/GLEICHSTROMWANDLER
MIXED ELECTRIC POWER SUPPLY SYSTEM COMPRISING AN INVERTER AND AN ALTERNATING-DIRECT CONVERTER

(30) Priorité: 30.08.1995 FR 9510233
(43) Date de publication de la demande: 17.06.1998
(73) Titulaire: RENAULT, 92109 Boulogne-Billancourt (FR)
(72) Inventeur: RICHER, Didier, F-75014 Paris (FR); DELBOSC, Philippe, F-75015 Paris (FR); FERRIEUX, Jean-Paul, F-38240 Meylan (FR); CHAUCHAT, Bertrand, F-43000 Le Puy-en-Velay (FR); BRUNELLO, Marc, F-38920 Crolles (FR)
(86) Numéro de dépôt international: FR9601339
(87) Numéro de publication internationale: WO9708009

(56) Documents cités:
- EP-A- 0 553 824
- EP-A- 0 603 778
- WO-A-93/01650
- DE-A- 4 107 391
- US-A- 4 920 475
- CONFERENCE RECORD OF THE INDUSTRY APPLICATIONS CONFERENCE, DENVER, OCT. 2 - 5, 1994, vol. 1, 2 Octobre 1994, INSTITUTE OF ELECTRICAL AND ELECTRONICS ENGINEERS, pages 448-452, XP000514788 LEE S J ET AL: "AN INTEGRAL BATTERY CHARGER FOR 4 WHEEL DRIVE ELECTRIC VEHICLE"

## Description

La présente invention concerne un système d'alimentation électrique comprenant un onduleur pour transformer une tension continue en une tension alternative et un convertisseur alternatif-continu pour transformer une tension alternative monophasée en une tension continue.

Un tel système trouve notamment application dans le domaine automobile, l'onduleur servant à alimenter le moteur électrique d'un véhicule automobile électrique à partir d'une batterie d'accumulateurs, et le convertisseur alternatif-continu à recharger la batterie d'accumulateurs quand le véhicule est à l'arrêt.

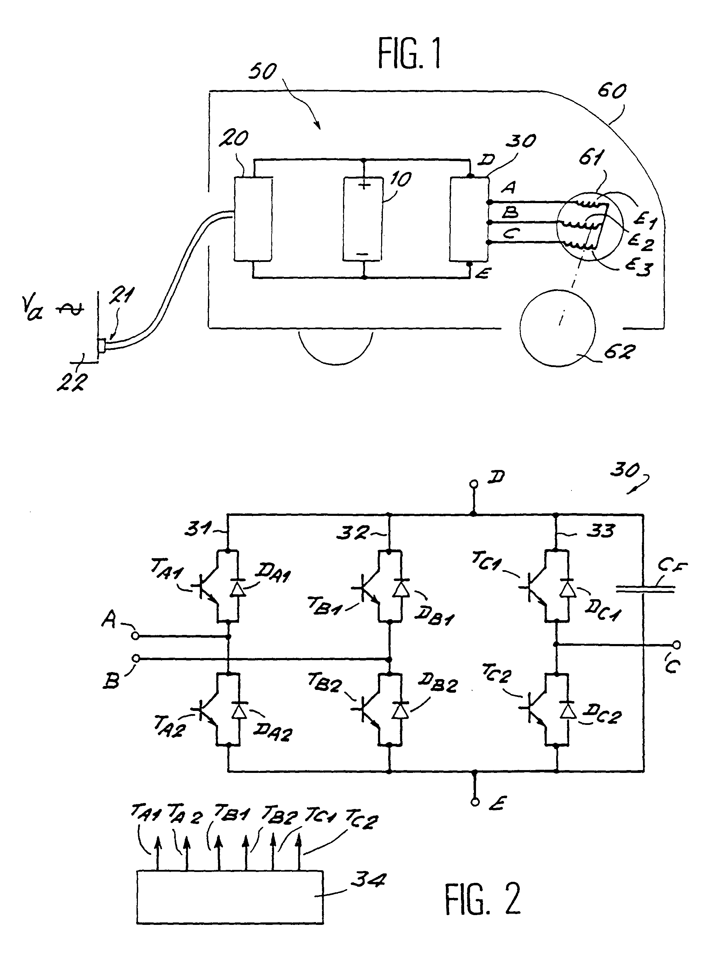

La figure 1 représente un système d'alimentation classique 50 du type cité ci-dessus, embarqué à bord d'un véhicule automobile électrique 60. Le système 50 est associé à une batterie d'accumulateurs 10 et à un moteur triphasé 61 entraînant les roues 62 du véhicule 60, et comprend essentiellement un convertisseur alternatif-continu, ou chargeur 20, et un onduleur triphasé 30. L'onduleur 30 comprend deux bornes d'entrée d'alimentation D et E connectées aux pôles positif et négatif de la batterie 10, ainsi que trois bornes de sorties A, B, C connectées à trois enroulements inducteurs E1, E2, E3 du moteur 61.

On distingue dans le fonctionnement du système d'alimentation 50 de la figure 1 un mode traction du véhicule 60 et un mode charge de la batterie 10. En mode traction, la batterie 10 alimente le moteur 61 par l'intermédiaire de l'onduleur 30. En mode charge, l'onduleur 30 n'est pas utilisé, le véhicule 60 est à l'arrêt, le chargeur 20 est connecté à une borne d'alimentation 22 grâce à un organe de liaison 21, généralement un fil et une prise électrique, et assure le rechargement de la batterie 10.

A l'heure actuelle, en raison de la diversité des modèles de batteries utilisés dans les voitures à moteur électrique, il n'est pas envisagé d'installer chez chaque utilisateur privé une borne d'alimentation délivrant des tensions continues permettant de recharger directement tout type de batterie. Ainsi, la borne 22 délivre une tension alternative Va, généralement la tension du secteur (240 V/50 Hz ou 110 V/60 Hz selon les pays).

Il est donc nécessaire que chaque véhicule possède son propre chargeur de batterie, pour assurer la conversion de la tension du secteur en une tension continue adaptée à la batterie. L'inconvénient est que le chargeur entraîne une augmentation sensible du coût de l'ensemble. De plus, le chargeur représente un poids mort indésirable quand le véhicule est en service.

Le document WO-A-93 01650 divulgue un système selon le préambule de la revendication 1. Toutefois, dans ce système, le moteur est séparé de l'onduleur pendant la charge de la batterie. L'article de Sang Joon Lee et Seung Ki Sul "AN INTEGRAL BATTERY CHARGER FOR 4 WHEEL DRIVE ELECTRIC VEHICLE" publié dans CONFERENCE RECORD OF THE INDUSTRY APPLICATIONS CONFERENCE, DENVER, OCT. 2 - 5, 1994, vol. 1, 2, Octobre 1994 par l'INSTITUTE OF ELECTRICAL AND ELECTRONICS ENGINEERS décrit un véhicule électrique avec quatre moteurs de traction électriques triphasés et quatre onduleurs. Les onduleurs peuvent être fait fonctionner en convertisseur alternatif-continu avec un étage redresseur-survolteur et un étage dévolteur, chaque moteur pouvant être utilisé pour procurer une seule inductance du convertisseur.

Un but de la présente invention est de prévoir un système d'alimentation comportant une fonction onduleur et une fonction convertisseur alternatif-continu d'une structure plus simple que les systèmes connus.

Pour atteindre ce but, la présente invention prévoit un système tel que défini dans la revendication 1.

Des objets, caractéristiques et avantages de la présente invention apparaîtront plus clairement à la lecture de la description suivante d'exemples de réalisation d'un système d'alimentation selon la présente invention, en relation avec les figures jointes parmi lesquelles :
- la figure 1 précédemment décrite représente un système d'alimentation classique d'un moteur électrique de véhicule automobile,
- la figure 2 est un schéma électrique d'un onduleur classique présent dans le système de la figure 1,
- les figures 3A, 3B et 3C ont pour but d'illustrer l'invention et représentent divers circuits électroniques,
- la figure 4 est un schéma électrique d'un système d'alimentation du type utilisé dans la présente invention,
- la figure 5 représente des circuits de commande du système de la figure 4 fonctionnant en mode "convertisseur alternatif-continu",
- les figures 6A et 6B représentent divers signaux électriques apparaissant dans le système de la figure 4,
- la figure 7 représente des enroulements inducteurs d'un moteur triphasé, et
- les figures 8, 9 et 10 représentent des variantes de réalisation du système d'alimentation de la figure 4 utilisant les enroulements inducteurs du moteur de la figure 7.

### Description de l'invention

La figure 2 représente la structure électrique de l'onduleur 30 classique de la figure 1. L'onduleur 30 comprend, montés en parallèle entre ses bornes d'alimentation D et E, trois bras interrupteurs 31, 32, 33 et une capacité de filtrage Cf. Chaque bras 31, 32, 33 comporte en série deux groupes interrupteurs hacheurs/diodes (par exemple des transistors MOS avec leurs diodes inverses) référencés T_{A1}/D_{A1} et T_{A2}/D_{A2}, T_{B1}/D_{B1} et T_{B2}/D_{B2}, T_{C1}/D_{C1} et T_{C2}/D_{C2}, respectivement, chaque diode D_{A1},...D_{C2} étant montée en inverse relativement au sens normal de conduction de chaque interrupteur T_{A1},...T_{C2}. Les bornes de sorties A, B, C de l'onduleur 30 sont connectées aux points milieu des bras 31, 32, 33. Le fonctionnement de l'onduleur 30 est assuré par un circuit électronique 34 qui commande les fermetures des interrupteurs T_{A1} à T_{C2} et détermine pour chaque bras 31, 32, 33 les cycles de hachage de la tension continue délivrée par la batterie 10.

Pour simplifier la structure du système d'alimentation classique 50 de la figure 1, la présente invention propose de réaliser un convertisseur de type alternatif-continu au moyen des interrupteurs T_{A1} à T_{C2} de l'onduleur 30 qui sont inutilisés pendant la charge de la batterie 10. Ainsi, le chargeur 20 de la figure 1 pourra être supprimé.

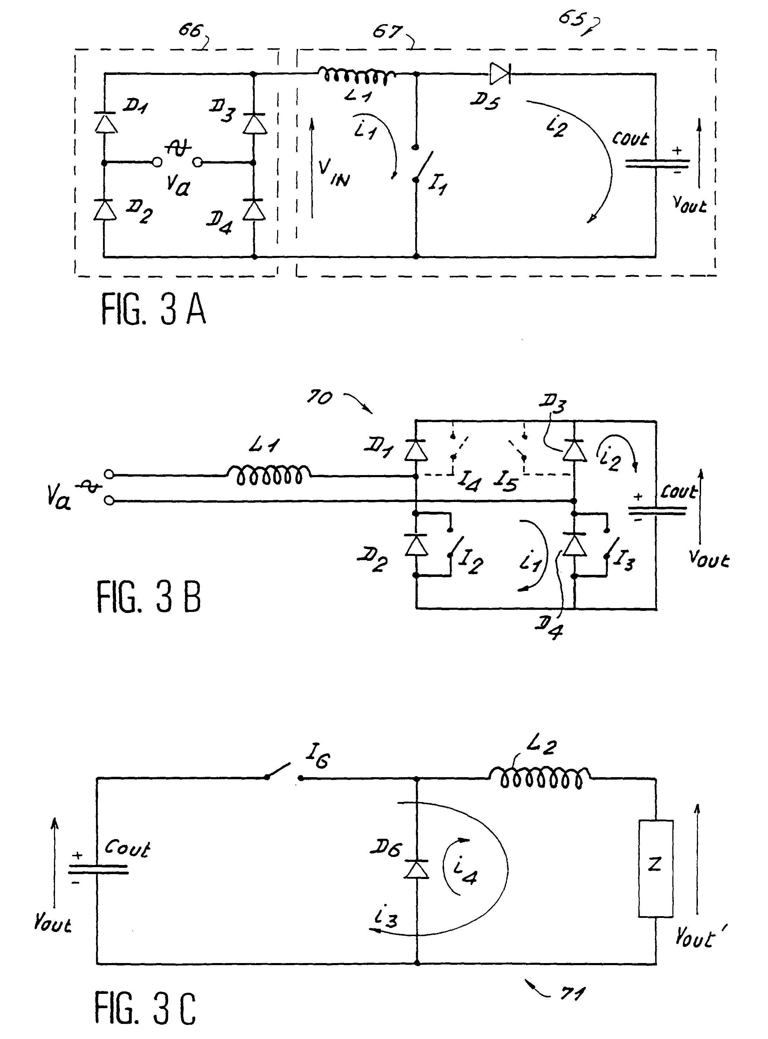

Avant de donner des exemples de l'invention, on décrira en relation avec les figures 3A, 3B et 3C la structure électrique d'un convertisseur alternatif-continu que la présente invention propose de réaliser à partir des éléments présents dans l'onduleur 30.

La figure 3A représente le schéma électrique classique d'un circuit redresseur-survolteur 65, comprenant un étage redresseur 66 suivi d'un étage survolteur 67. L'étage redresseur 66 est un pont de diodes D1, D2, D3, D4 qui reçoit une tension alternative monophasée Va et délivre une tension continue Vin en entrée de l'étage survolteur 67. L'étage survolteur 67 est un convertisseur de type continu-continu à stockage inductif bien connu de l'homme de l'art sous le nom de circuit "boost". La tension Vin est appliquée à une extrémité d'une inductance L1 dont l'autre extrémité est reliée à un interrupteur hacheur I1 ainsi qu'à une diode D5 en série avec une capacité Cout délivrant la tension de sortie Vout de l'étage survolteur 67. Le fonctionnement de l'étage survolteur 67 est basé sur la réalisation de cycles rapides de transfert d'énergie comprenant une période d'accumulation d'une énergie magnétique dans l'inductance L1, où I1 est fermé, suivie d'une période de transfert de cette énergie sous forme de courant dans la capacité Cout, où I1 est ouvert. Ainsi, quand I1 est fermé, un courant i1 circule dans L1 et I1. A l'ouverture de I1, un courant i2 est injecté par L1 dans la boucle formée par D5 et Cout, et la tension Vout augmente. Classiquement, les périodes de fermeture et d'ouverture de l'interrupteur I1 sont asservies afin de réguler la tension de sortie Vout qui pourrait augmenter indéfiniment cycle après cycle.

Si l'on se reporte maintenant à la figure 3B, on voit un circuit redresseur-survolteur 70 qui, bien que d'aspect différent, fonctionne de la même manière que le circuit 65. On y retrouve l'inductance L1, le pont redresseur à diodes D1, D2, D3, D4 et la capacité Cout. L'inductance L1 est interposée entre la source de tension monophasée Va et l'entrée du pont redresseur, la capacité Cout est directement connectée à la sortie du pont redresseur. L'interrupteur hacheur I1 de la figure 3A est remplacé par deux interrupteurs hacheurs I2 et I3 synchronisés, I2 étant connecté en parallèle aux bornes de D2 et I3 en parallèle aux bornes de D4. Pendant la phase de stockage, I2 et I3 sont fermés et un courant d'accumulation i1, dont le sens dépend de la polarité positive ou négative de l'alternance de Va, circule dans L1, I2 et I3. Pendant la phase de transfert, I2 et I3 sont ouverts et L1 injecte un courant i2 dans Cout, par l'intermédiaire de D1 et D4 ou D3 et D2 selon la polarité de Va.

Une variante de réalisation du circuit 70 représentée en traits pointillés sur la figure 3B consiste à ajouter aux bornes de D1 et D3 deux interrupteurs I4 et I5. Dans ce cas, I3 et I4 sont fermés pendant les périodes de conduction de D1 et D4, et I2 et I5 fermés pendant les périodes de conduction de D2 et D3. Les pertes de tension aux bornes des diodes pendant les phases de transfert sont supprimées et le rendement du circuit 70 amélioré.

Sur la figure 3C, on voit un circuit dévolteur 71 (ou abaisseur de tension) dont l'entrée reçoit la capacité Cout, de tension Vout, du circuit redresseur-survolteur 70 de la figure 3B. Le circuit dévolteur 71 délivre une tension Vout' appliquée à une impédance Z. Le circuit dévolteur 71 est un convertisseur de tension continu-continu à stockage inductif bien connu de l'homme de l'art sous le nom de circuit "buck". La capacité Cout est reliée à un interrupteur hacheur I6 dont l'autre extrémité est reliée à une diode D6 et à une inductance L2 en série avec l'impédance Z. Lorsque I6 est fermé, un courant i3 circule dans Cout, I6, L2 et Z. Lorsque I6 est ouvert, un courant i4 généré par l'inductance L2 circule dans D6, L2 et Z. Un asservissement approprié des périodes d'ouverture et de fermeture de I6 permet de contrôler avec précision la tension de sortie Vout' et le courant i4 traversant l'impédance Z.

Si l'on associe maintenant le circuit 70 de la figure 3B et le circuit 71 de la figure 3C, on voit que l'on obtient un convertisseur alternatif-continu 70, 71 de type redresseur-survolteur-dévolteur, apte à assurer la charge d'une batterie (l'impédance Z représentant alors une batterie). Si l'on compare ensuite la figure 2 aux figures 3B et 3C, on voit qu'il est possible de réaliser un tel circuit redresseur-survolteur-dévolteur 70, 71 au moyen des trois bras interrupteurs 31, 32, 33 de l'onduleur 30, en ajoutant simplement à l'onduleur 30 l'inductance L1 de la figure 3B et l'inductance L2 de la figure 3C. La capacité de filtrage Cf de l'onduleur peut être utilisée comme capacité de sortie du redresseur-survolteur 70 (Capacité Cout de la figure 3B).

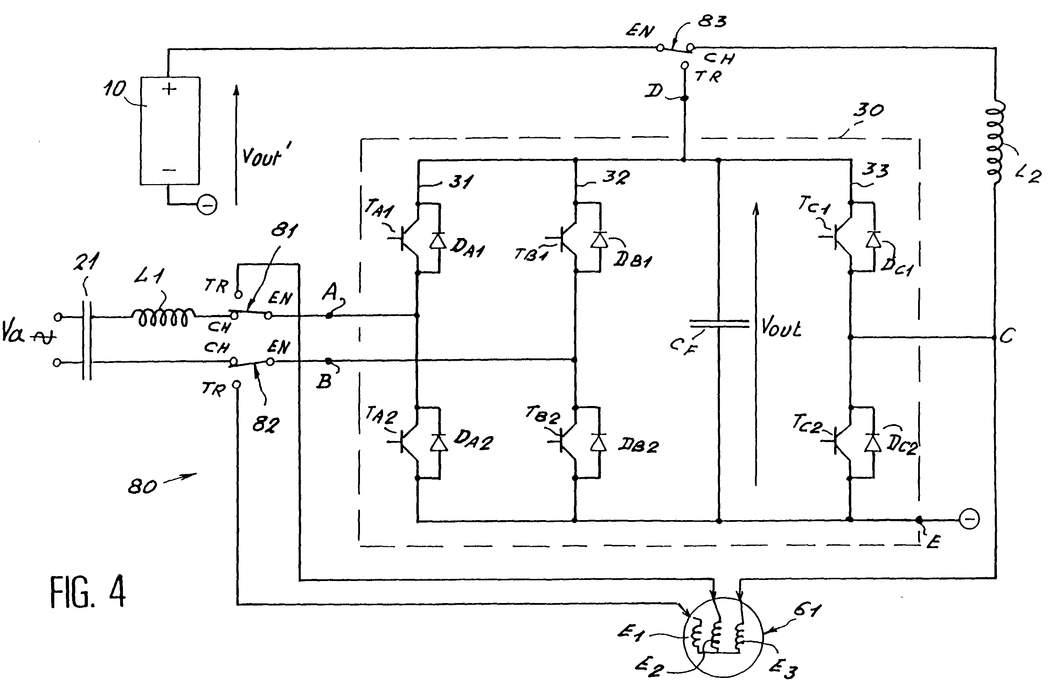

La figure 4 représente dans le cadre d'une application à un véhicule à moteur électrique (non représenté) un système d'alimentation 80 selon la présente invention. On retrouve sur la figure 4 la batterie d'accumulateurs 10, la structure électrique à trois bras 31, 32, 33 de l'onduleur 30, comportant les bornes A, B, C, D, E, le moteur 61 à trois enroulements E1, E2, E3 et l'organe de liaison 21 à la tension secteur Va, déjà décrits en relation avec les figures 1 et 2.

Le système d'alimentation 80 selon l'invention comprend la structure électrique de l'onduleur 30 à laquelle sont ajoutées deux inductances, que l'on désignera par L1 et L2 par analogie avec les figures 3B et 3C, et trois basculeurs 81, 82, 83 (interrupteurs à deux positions). Chaque basculeur 81, 82, 83 présente un plot d'entrée EN et deux plots de sortie CH, TR et peut être mis en position "charge" (plot EN relié au plot CH) ou "traction" (plot EN relié au plot TR). Le basculeur 81 est relié à la borne A de l'onduleur 30 par son plot EN, à une extrémité de l'inductance L1 par son plot CH, et à l'enroulement E2 du moteur 61 par son plot TR. L'autre extrémité de l'inductance L1 est reliée à une phase de la tension secteur Va par l'intermédiaire de l'organe de liaison 21. Le basculeur 82 est relié à la borne B de l'onduleur 30 par son plot EN, à l'autre phase (ou le neutre) de la tension secteur Va par son plot CH (via l'organe de liaison 21), et à l'enroulement E1 du moteur 61 par son plot TR. Le basculeur 83 est relié à la borne positive de la batterie 10 par son plot EN, à la borne D de l'onduleur 30 par son plot TR, et par son plot CH à une extrémité de l'inductance L2 dont l'autre extrémité est reliée à la borne C de l'onduleur 30. La borne C est également reliée à l'enroulement E3 du moteur 61. Enfin, la borne E est connectée en permanence à la borne négative de la batterie 10.

Quand les trois basculeurs 81, 82, 83 sont en position "traction", les bornes A, B, C de l'onduleur 30 sont connectées aux enroulements E1, E2 ,E3 et la borne D au pôle positif de la batterie 10. On retrouve la configuration classique de fonctionnement représentée en figure 1, où le moteur 61 est alimenté en tension triphasée par l'onduleur 30 qui assure le hachage de la tension continue délivrée par la batterie 10.

Quand les trois basculeurs 80, 81, 82 sont en position "charge" et que l'organe de liaison 21 est branché, les bornes A et B sont connectées à Va par l'intermédiaire de L1, la borne C est connectée au pôle positif de la batterie 10 par l'intermédiaire de L2 et la borne D n'est pas connectée. Le système 80 selon l'invention fonctionne alors comme un convertisseur alternatif-continu et assure la charge de la batterie 10. Plus précisément, on distingue dans le système 80 :
- un étage redresseur-survolteur (ou étage "boost") de la tension secteur Va, analogue au circuit redresseur-survolteur 70 de la figure 3B, comprenant l'inductance L1 et les deux bras 31, 32 de l'onduleur 30. La capacité Cf sert de capacité de sortie de l'étage redresseur-survolteur et on trouve à ses bornes une tension continue référencée Vout par analogie avec la figure 3B, Vout étant supérieure à la valeur de crête de la tension alternative Va,
- un étage dévolteur (ou étage "buck") comprenant l'inductance L2 et le troisième bras 33, analogue au circuit dévolteur 71 de la figure 3C, transformant Vout en une tension référencée Vout' par analogie avec la figure 3C, compatible avec la batterie 10. D'un point de vue fonctionnel, l'interrupteur T_{C1} (équivalent à l'interrupteur I6 de la figure 3C) et la diode D_{C2} (équivalente à la diode D6 de la figure 3C) sont nécessaires et suffisants à la réalisation de l'étage dévolteur.

Ainsi, avantageusement, le système d'alimentation 80 selon l'invention forme un système mixte dans lequel les fonctions "onduleur" et "convertisseur alternatif-continu" sont intégrées au maximum.

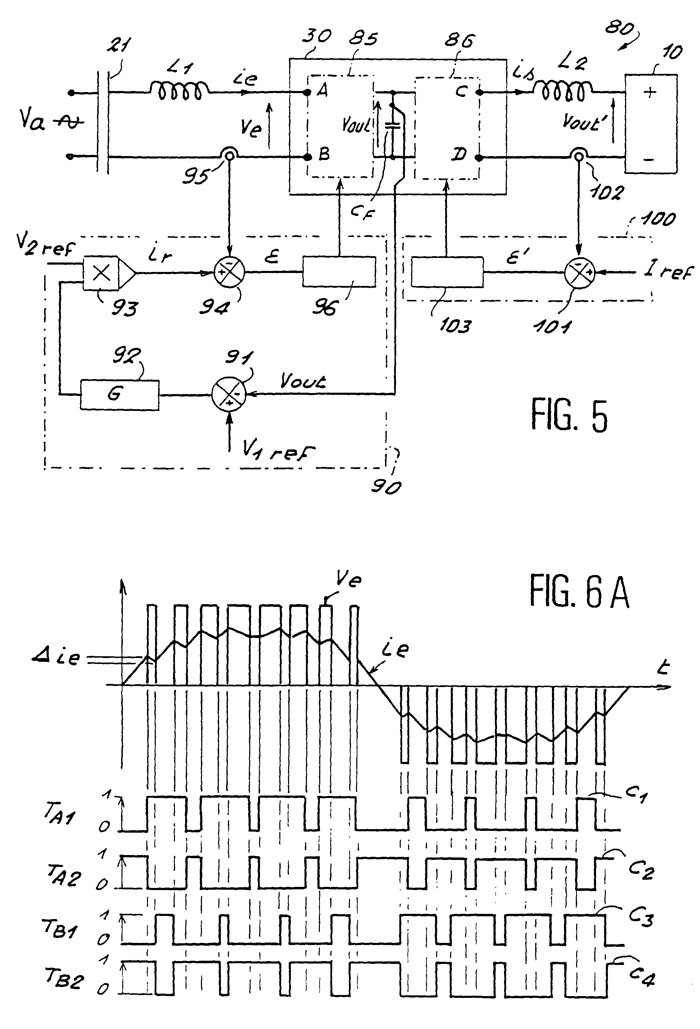

La figure 5 représente à titre d'exemple non limitatif deux circuits 90 et 100 de commande du système 80 lorsqu'il est en mode "charge". Sur la figure 5, les basculeurs 81, 82, 83, en position "charge", ne sont pas représentés. Les bras 31, 32 de l'onduleur 30 sont schématisés par un bloc 85 et le bras 33 schématisé par un bloc 86. Le circuit 90 contrôle les interrupteurs T_{A1}, T_{A2}, T_{B1}, T_{B2} du bloc 85 et le circuit 100 contrôle l'interrupteur T_{C1} du bloc 86 et, de façon optionnelle, l'interrupteur T_{C2}, comme on le verra plus loin.

Selon le mode de commande choisi, le circuit 90 est conçu pour assurer à la fois la régulation de la surtension Vout et l'asservissement du courant d'entrée iₑ de l'étage redresseur-survolteur (comprenant l'inductance L1 et le bloc 85), afin de permettre l'absorption d'un courant sinusoïdal en phase avec la tension Va du réseau. Le circuit 90 comprend ainsi un amplificateur soustracteur 91 qui reçoit sur son entrée positive une tension continue de référence V1ref et sur son entrée négative la tension Vout prélevée aux bornes de la capacité Cf. La sortie de l'amplificateur 91 est envoyée en entrée d'un circuit amplificateur correcteur 92 de gain G dont la sortie est appliquée sur une entrée d'un amplificateur multiplieur 93. L'autre entrée du multiplieur 93 reçoit une tension alternative de référence V2ref en phase avec la tension Va du réseau. La tension V2ref peut être prélevée sur le réseau lui-même ou reconstituée numériquement de façon synchrone. Le multiplieur 93 délivre une référence de courant iᵣ envoyée sur l'entrée positive d'un comparateur 94 recevant sur son entrée négative un signal représentatif du courant d'entrée iₑ (ou courant absorbé), délivré par un capteur de courant 95. Le comparateur 94 délivre un signal d'erreur ε en entrée d'un circuit 96 à microprocesseur programmé qui commande les interrupteurs T_{A1}, T_{A2}, T_{B1}, T_{B2} du bloc 85.

Dans la pratique, on constate que les divers éléments du circuit 90 qui viennent d'être décrits existent déjà dans les systèmes d'alimentation classiques à onduleur et chargeur de batterie, car ils sont nécessaires à la réalisation de la fonction "onduleur". La fonction "redresseur-survolteur" selon l'invention peut donc être réalisée à peu de frais et sans encombrement supplémentaire, moyennant une adaptation à la portée de l'homme de l'art du logiciel du circuit 96, qui devra comporter outre un programme classique de fonctionnement en mode "onduleur" un programme de fonctionnement en mode "redresseur-survolteur". Une autre possibilité consiste à réaliser le circuit 90 au moyen d'un circuit standard disponible dans le commerce, par exemple le circuit commercialisé sous la référence "Thomson L6560 Power Factor Corrector".

Le circuit 100 assure le contrôle du courant de charge iₛ délivré à la batterie 10 par l'étage dévolteur (comprenant le bloc 86 et l'inductance L2). A cet effet, il comprend un amplificateur soustracteur 101 qui reçoit sur son entrée positive un signal de référence Iref et sur son entrée négative un signal représentatif du courant iₛ, délivré par un capteur de courant 102. La sortie du soustracteur 101 délivre un signal d'erreur ε' en entrée d'un circuit 103 à microprocesseur qui commande l'interrupteur T_{C1} du bloc 86.

Bien que l'on ait représenté les circuits 96 et 103 comme des circuits distincts, il apparaîtra clairement à l'homme de l'art que la commande des interrupteurs T_{A1}, T_{A2}, T_{B1}, T_{B2}, T_{C1}, T_{C2} des blocs 85 et 86 peut dans la pratique être assurée par un seul et même circuit.

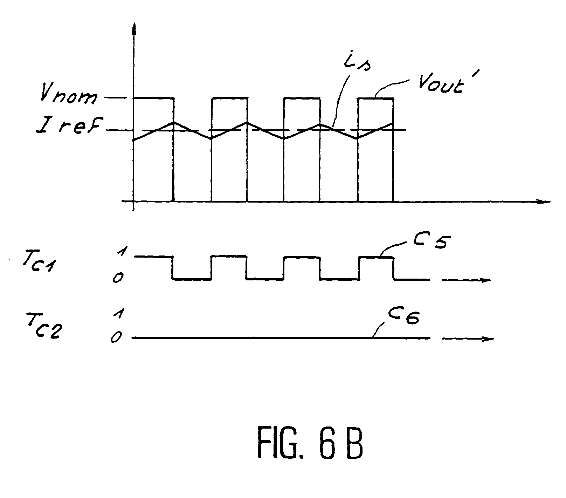

Le fonctionnement du système 80 ainsi commandé sera maintenant décrit en se référant aux figures 6A et 6B.

La figure 6A représente, pour une période T de la tension secteur Va, la courbe du courant iₑ absorbé par l'étage redresseur-survolteur (bloc 85 et inductance L1), la courbe d'une tension Vₑ apparaissant entre l'inductance L1 et le bloc 85, et les chronogrammes C1, C2, C3, C4 des signaux de commande appliqués par le circuit 96 aux interrupteurs T_{A1}, T_{A2}, T_{B1}, T_{B2} (une commande à 1 signifiant la fermeture d'un interrupteur).

La figure 6B représente la courbe du courant iₛ et la courbe de tension Vout' délivrés à la batterie 10 par l'étage dévolteur (bloc 86 et inductance L2), ainsi que les chronogrammes C5 et C6 des signaux de commande des interrupteurs T_{C1} et T_{C2}.

Sur la figure 6A, on voit une succession d'un grand nombre de phases de stockage (Ve nul, stockage d'une énergie magnétique dans L1) et de transfert (Ve non nul, libération de l'énergie sous forme d'un courant injecté dans Cf) de courtes durées. Pendant ces phases de stockage et de transfert le courant iₑ présente des micro-variations Δiₑ, mais sa forme générale est celle d'une sinusoïde en phase avec la tension secteur Va.

Les tableaux 1 et 2 ci-après résument le fonctionnement de l'étage redresseur-survolteur du système 80 et décrivent quatre phases de stockage ou de transfert qui se répètent un grand nombre de fois à chaque demi-période T/2 de la tension secteur Va.

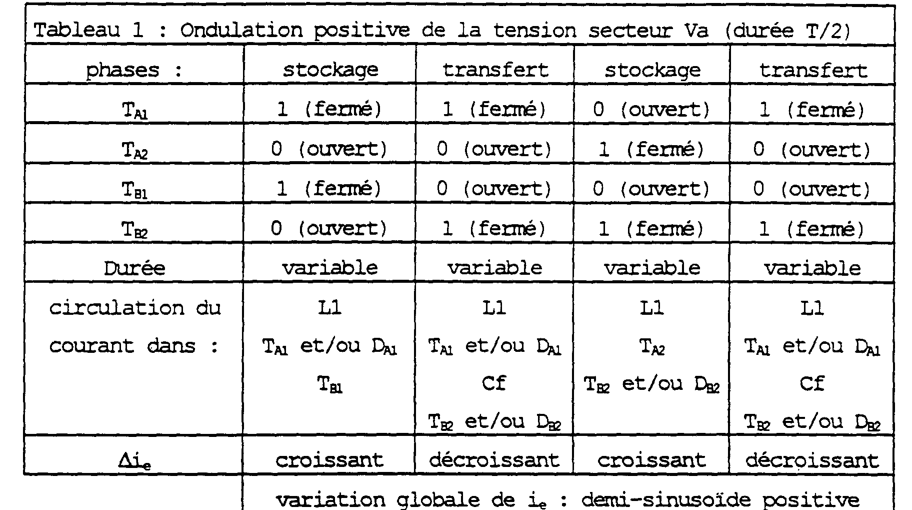

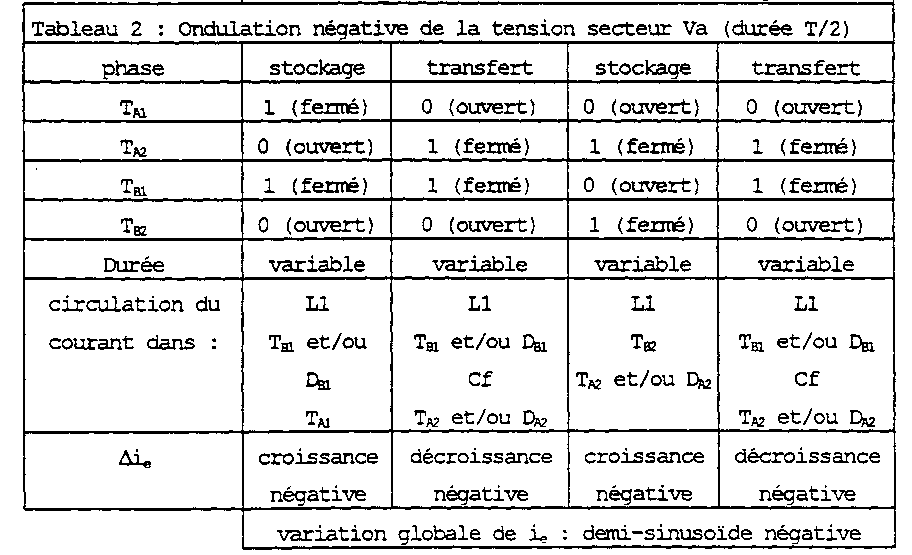

Les durées des phases de stockage/transfert sont variables et asservies au signal d'erreur ε qui dépend des consignes V1ref (qui impose la valeur de Vout) et V2ref (qui impose la forme sinusoïdale au courant absorbé iₑ). Un tel asservissement peut être obtenu grâce à diverses techniques connues, notamment les techniques de commande par modulation de largueur d'impulsion (durée des phases de stockage ou de transfert fonction de la valeur de ε) ou de commande par fourchette (changements de phases quand ε se trouve en dehors d'un gabarit prédéterminé).

La commande des interrupteurs T_{A1}, T_{A2}, T_{B1}, T_{B2} pendant les phases de stockage est choisie de manière à alterner les mises en conduction des interrupteurs (T_{A1} et T_{B1}, puis T_{A2} et T_{B2}, etc.), afin de bien répartir la dissipation de puissance dans les bras 31 et 32.

De plus, afin d'assurer la commutation douce des interrupteurs (fermeture à tension nulle) et améliorer le rendement du système, chaque interrupteur T_{A1}, T_{A2}, T_{B1}, T_{B2} est fermé quand sa diode D_{A1}, D_{A2}, D_{B1}, D_{B2} correspondante se met en conduction. Si en outre chaque interrupteur T_{A1}, T_{A2}, T_{B1}, T_{B2} est choisi bidirectionnel, les diodes sont mises en court-circuit par les interrupteurs, de sorte que les tensions de diodes (dites tensions de déchet) sont supprimées et le rendement encore amélioré.

Sur la figure 6B, on voit que le contrôle des périodes de fermetures de T_{C1} par le circuit 100 permet de maintenir le courant iₛ délivré à la batterie 10 autour de la consigne Iref et de maintenir la tension Vout' à la valeur tension nominale Vnom de la batterie 10, l'interrupteur T_{C2} n'étant pas utilisé (chronogramme à 0). Toutefois, si l'interrupteur T_{C2} est bidirectionnel, une variante de réalisation consiste à fermer T_{C2} pendant les périodes de conduction de D_{C2} pour supprimer la tension de déchet aux bornes de D_{C2}. Dans ce cas, et comme pour le bloc 85, les diodes du bloc 86 ne sont pas utilisées. I1 apparaîtra donc clairement à l'homme de l'art que la présente invention est applicable à une structure d'onduleur ne comportant pas de diodes, à la condition que les interrupteurs T_{A1} à T_{C2} soient bidirectionnels et que des temps de recouvrement dans les fermetures des interrupteurs soient prévus lors des changements de phases pour éviter le claquage électrique de ces derniers.

Dans la pratique, un onduleur destiné à alimenter un moteur électrique d'un véhicule automobile se prête particulièrement bien à la transformation selon l'invention. En effet, un tel onduleur est conçu pour transmettre des puissances élevées pouvant atteindre 30 kW avec des courants de 300 A, alors que les puissances et courants mis en jeu en fonctionnement "convertisseur alternatif-continu" n'excèdent généralement pas les 10 kW et les 50 A.

Une simple modification des consignes V1ref, Iref données aux circuits de commande 90 et 100 de la figure 5 permet d'adapter le système 80 de l'invention à tous types de tensions secteur, par exemple 110 V/60 Hz ou 240 V/50 Hz, ainsi qu'à tout type de tensions de batteries, par exemple 108 V, 156 V, 288 V, etc. moteur triphasé à trois enroulements E1, E2, E3 entièrement accessibles.

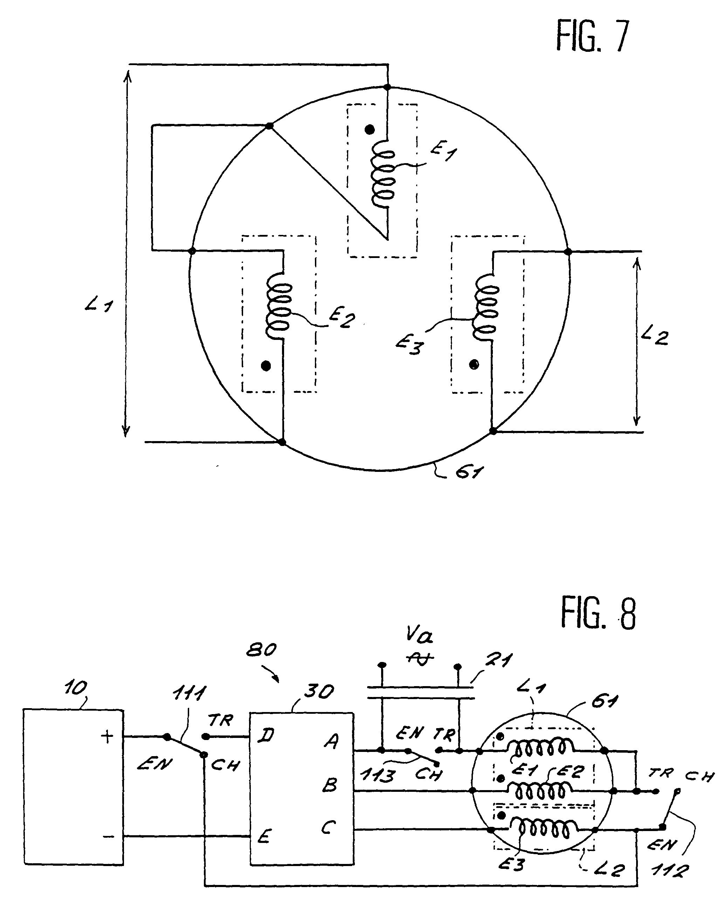

La figure 7 représente les trois enroulements inducteurs E1, E2, E3 du moteur 61. On suppose ici que toutes les bornes des enroulements sont accessibles de l'extérieur. On voit que l'on peut utiliser deux enroulements en série, par exemple E1, E2, pour réaliser une première inductance, par exemple L1, et l'enroulement restant, par exemple E3, pour réaliser la deuxième inductance, par exemple L2. De préférence, E1 et E2 sont connectés de manière que leurs sens d'enroulement soient en opposition, afin d'éviter le couplage électromagnétique de E1/E2 (L1) avec E3 (L2). Ce procédé permet également de ne pas produire de couple mécanique dans le moteur 61.

Les trois enroulements (E1,E2,E3) du moteur sont répartis en deux inductances L1 et L2 :
- deux enroulements E1 et E2 sont connectées en anti-série,
- un enroulement E3 est indépendant.
Les trois enroulements sont répartis à 120° dans l'espace. Le champ magnétique résultant de l'inductance L1 qui est composée des deux enroulements E1 et E2, se trouve en quadrature avec le champ magnétique crée par le troisième enroulement E3.

En conséquence, la mutuelle inductance se trouve annulée entre ces deux inductances L1 et L2, rendant indépendant d'un point de vue électrique et magnétique ces deux ensembles.

La figure 8 représente un mode de réalisation du système 80 dans lequel, en mode "charge", les enroulements E1 et E2 forment l'inductance L1 et l'enroulement E3 l'inductance L2. On retrouve la batterie 10, l'onduleur 30 et ses bornes A, B, C, D, E, et le moyen de liaison 21 à la tension secteur Va. La commutation du système 80 en mode "charge" ou "traction" est assurée par trois basculeurs 111, 112, 113. Comme précédemment, chaque basculeur présente un plot d'entrée EN et deux plots de sortie CH et TR. Le basculeur 111 est relié à la borne positive de la batterie 10 par son plot EN et à la borne D de l'onduleur 30 par son plot TR. Le basculeur 112 est relié à des extrémités de E1 et E2 par son plot TR, à une extrémité de E3 et au plot CH du basculeur 112 par son plot EN, le plot CH n'étant pas connecté (le basculeur 112 peut donc être un simple interrupteur). Le basculeur 113 est relié à l'autre extrémité de E1 par son plot TR et à la borne A par son plot EN, le plot CH n'étant pas connecté.

Le basculeur 113 peut donc être un simple interrupteur.

Enfin, les autres extrémités de E2 et E3 sont reliées aux bornes B et C de l'onduleur 30, la tension Va est appliquée aux plots EN et TR du basculeur 113 quand celui-ci est en position "charge" par l'intermédiaire du moyen de liaison 21. La borne E de l'onduleur 30 est reliée en permanence à la borne négative de la batterie.

Quand les basculeurs 111, 112 et 113 sont en position "charge" ou "traction", on retrouve les deux configurations du système 80 déjà décrites en relation avec la figure 4, à la différence près qu'en mode "charge", L1 est formée par E1 en série avec E2, et L2 formée par E3. En mode "traction", E1, E2, E3 sont agencés en étoile et connectés aux bornes A, B, C de l'onduleur 30.

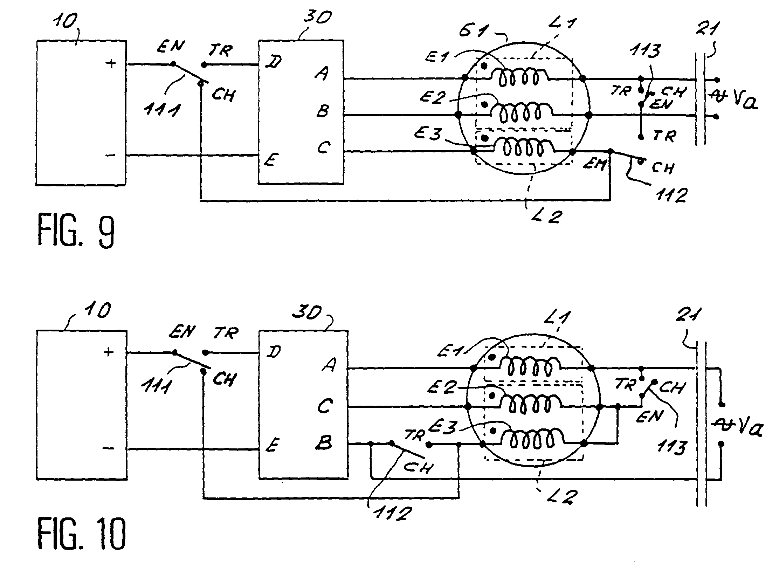

La figure 9 représente une variante du montage de la figure 8. Les bornes A, B, C de l'onduleur 30 sont directement reliées aux enroulements E1, E2, E3. L'autre extrémité de E2 est reliée au plot TR du basculeur 112 et au plot EN du basculeur 113. L'autre extrémité de E1 est reliée au plot TR du basculeur 113 dont le plot CH n'est pas connecté. La tension secteur Va est appliquée aux plots TR et EN du basculeur 113 par l'intermédiaire de l'organe de liaison 21 quand le système est en mode "charge". Ainsi, en mode "charge", la borne A de l'onduleur 30 est reliée à une phase de la tension secteur Va par l'intermédiaire de E1 et la borne B à l'autre phase (ou le neutre) de la tension Va par l'intermédiaire de E2. L'avantage de cette configuration symétrique est de répartir l'inductance d'accumulation L1 formée par E1 et E2 sur les deux phases (ou phase et neutre) de la tension secteur Va.

La figure 10 représente une autre variante du montage de la figure 8. Dans ce cas, les basculeurs 112 et 113 sont agencés de manière qu'en mode "charge" l'inductance L1 soit formée par E1 et l'inductance L2 par E2 et E3 en série.

L'homme de l'art choisira l'un des modes de réalisation des figures 8 à 10 ou toute autre variante de réalisation en fonction des valeurs de E1, E2, E3 qu'offre le moteur 61 et des valeurs recherchée pour L1 et L2.

## Revendications

1. Système (80) pour recharger à partir d'une source de tension monophasée (Va) une batterie d'accumulateurs (10) d'un véhicule automobile équipé d'un moteur de traction électrique triphasé (61) à trois enroulements (E1, E2, E3) et d'un onduleur (30) d'alimentation du moteur triphasé (61) avec trois bras interrupteurs (31, 32, 33), comprenant des moyens pour faire fonctionner ledit onduleur (30) en convertisseur alternatif-continu avec un étage redresseur-survolteur (70, 85) comprenant un premier (31) et un deuxième (32) bras interrupteurs de l'onduleur (30), un étage dévolteur (71, 86) comprenant un troisième bras interrupteur (33) de l'onduleur (30) et des moyens (81, 82, 83, 111, 112, 113) pour connecter :
- les points milieu (A, B) des premier (31) et deuxième (32) bras interrupteurs à la source de tension monophasée (Va), et
- le point milieu (D) du troisième bras interrupteur (33, 86) à la batterie (10) à alimenter en tension continue (Vout'),
**caractérisé en ce que**
- les points milieu (A, B) des premier (31) et deuxième (32) bras interrupteurs sont connectés à ladite source de tension monophasée (Va) par l'intermédiaire d'une première inductance (L1) constituée par ou moins un enroulement du moteur triphasé (61), et
- le point milieu du troisième bras interrupteur (33) est connecté à la batterie (10) par l'intermédiaire d'une deuxième inductance (L2) constituée par au moins un enroulement dudit moteur triphasé (61) distinct du ou des enroulements constituant la première inductance (L1).

2. Système (80) selon la revendication 1, **caractérisé en ce que** l'une desdites inductances (L1, L2) est formée par deux premiers (E1-E2, E2-E3) enroulements du moteur de traction (61), l'autre inductance (L2, L1) étant formée par le troisième enroulement (E3, E1) du moteur de traction (61).

3. Système (80) selon la revendication 2, **caractérisé en ce que** l'une desdites inductances (L1, L2) est formée par deux premiers (E1-E2, E2-E3) enroulements du moteur de traction (61) agencés selon des sens d'enroulement en opposition, l'autre inductance (L2, L1) étant formée par le troisième enroulement (E3, E1) du moteur de traction (61).

4. Système (80) selon la revendication 2 ou 3, **caractérisé en ce que**, en mode de fonctionnement convertisseur alternatif-continu, le point milieu (A) du premier bras interrupteur (31) reçoit la tension monophasée (Va) par l'intermédiaire d'un premier enroulement (E1) du moteur, le point milieu (B) du deuxième bras interrupteur (32) reçoit la tension monophasée (Va) par l'intermédiaire d'un deuxième enroulement (E2) du moteur, et le point milieu ( C ) du troisième bras interrupteur (33) est connecté à la batterie (10) par l'intermédiaire d'un troisième enroulement (E3) du moteur.

5. Système (80) selon la revendication 2 ou 3, **caractérisé en ce que**, en mode de fonctionnement convertisseur alternatif-continu, le point milieu (A, B) d'un bras interrupteur (31, 32) de l'étage redresseur-survolteur (70, 85) reçoit la tension monophasée (Va) par l'intermédiaire de deux premiers enroulements (E1, E2) du moteur (61) agencés en série, et le point milieu ( C ) du bras interrupteur (33) de l'étage dévolteur (71, 86) est connecté à la batterie (10) par l'intermédiaire d'un troisième enroulement (E3) du moteur

6. Système (80) selon la revendication 2 ou 3, **caractérisé en ce que**, en mode de fonctionnement convertisseur alternatif-continu, le point milieu (A, B) d'un bras interrupteur (31, 32) de l'étage redresseur-survolteur (70, 85) reçoit la tension monophasée (Va) par l'intermédiaire d'un premier enroulement (E1) du moteur, et le point milieu ( C) du bras interrupteur (33) de l'étage dévolteur (71, 86) est connecté à la batterie (10) par l'intermédiaire de deux autres enroulements (E2, E3) du moteur agencés en série.

7. Système (80) selon l'une des revendications précédentes, **caractérisé en ce que** le circuit redresseur-survolteur (70, 85) est commandé (90, 100) de manière à absorber un courant sinusoïdal (le) en phase avec ladite tension monophasée (Va).

8. Système selon l'une des revendications précédentes, dans lequel lesdits bras interrupteurs (31, 32, 33) comprennent chacun au moins deux moyens interrupteurs (TA1/DA1, TA2/DA2, TB1/DB1, TB2/DB2, TC1/DC1, TC2/DC2) en série, **caractérisé en ce que** les moyens interrupteurs des bras interrupteurs (31, 32) de l'étage redresseur-survolteur sont rendus conducteurs de façon alternée de manière à répartir la dissipation de puissance.

9. Système selon la revendication 8, dans lequel chaque moyen interrupteur comprend un interrupteur (TA1, TA2, TB1, TB2, TC1, TC2) et une diode (DA1, DA2, DB1, DB2, DC1, DC2) en parallèle, **caractérisé en ce que** lesdits interrupteurs (TA1 - TC2) sont fermés quand leurs diodes correspondantes (DA1-DC2) sont susceptibles de conduire un courant, de manière à améliorer le rendement des circuits redresseur-survolteur (70, 85) et dévolteur (71, 86).

## Patentansprüche

1. System (80) zum Laden einer Batterie von Akkumulatoren (10) eines Kraftfahrzeugs aus einer einphasigen Spannungsquelle (Vₐ), wobei das Kraftfahrzeug mit einem Drehstrom-Antriebsmotor (61) mit drei Wicklungen (E1, E2, E3) und mit einem Wechselrichter (30) mit drei Unterbrechern (31, 32, 33) zur Speisung des Drehstrommotors (61) ausgestattet ist, wobei Mittel zum Betreiben des besagten Wechselrichters (30) als Wechsel/Gleichspannungswandler mit einer Gleichrichter-Spannungserhöhungsstufe (70, 85) vorgesehen sind, die einen ersten (31) und einen zweiten (32) Unterbrecherzweig des Wechselrichters, eine Spannungserniedrigungsstufe (71 86) mit einem dritten Unterbrecherzweig (33) des Wechselrichters (30) und Mittel (81, 82, 83, 111, 112 113) aufweisen zum Anschließen:
- der Mittenanzapfungen (A, B) des ersten (31) und zweiten (32) Unterbrecherzweiges an die einphasige Spannungsquelle (Vₐ) und
- der Mittenanzapfung (D) des dritten Unterbrecherzweiges (33, 86) an die Batterie (10)zur Versorgung mit Gleichspannung (V'ₒᵤₜ),
**dadurch gekennzeichnet, dass**
- die Mittenanzapfungen (A, B) des ersten (31) und des zweiten (32) Unterbrecherzweiges mit der besagten einphasigen Spannungsquelle (Vₐ) über eine erste Induktivität (L1) verbunden ist, die aus mindestens einer Wicklung des Drehstrommotors (61) besteht, und
- die Mittenanzapfung des dritten Unterbrecherzweiges (33) mit der Batterie (10) über eine zweite Induktivität (L2) verbunden ist, die aus mindestens einer Wicklung des besagten Drehstrommotors (61) besteht, welche von der oder den Wicklungen, die die erste Induktivität (L1) bilden, verschieden ist.

2. System (80) nach Anspruch 1, **dadurch gekennzeichnet, dass** eine der besagten Induktivitäten (L1, L2) aus zwei ersten (E1-E2, E2-E3) Wicklungen des Antriebsmotors (61) besteht und die andere Induktivität (L2, L1) aus der dritten Wicklung (E3, E1) des Antriebsmotors gebildet wird.

3. System (80) nach Anspruch 2, **dadurch gekennzeichnet, dass** eine der besagten Induktivitäten (L1, L2) aus zwei ersten (E1-E2, E2-E3) Wicklungen des Antriebsmotors (61) besteht, die entsprechend der Wickelrichtung gegenläufig betrieben werden, während die andere Induktivität (L2, L1) aus der dritten Wicklung (E3, E1) des Antriebsmotors gebildet wird.

4. System (80) nach Anspruch 2 oder 3, **dadurch gekennzeichnet, dass** im Funktionsmodus Stromrichter die Mittenanzapfung (A) des ersten Unterbrecherzweiges (31) die einphasige Spannung (Vₐ) über eine erste Wicklung (E1) des Motors erhält, die Mittenanzapfung (B) des zweiten Unterbrecherzweiges (32) die einphasige Spannung (Vₐ) über eine zweite Wicklung (E2) des Motors erhält und die Mittenanzapfung (C) des dritten Unterbrecherzweiges (33) mit der Batterie (10) über eine dritte Wicklung (E3) des Motors verbunden ist.

5. System (80) nach Anspruch 2 oder 3, **dadurch gekennzeichnet, dass** im Funktionsmodus Stromrichter die Mittenanzapfung (A, B) eines Unterbrecherzweiges (31, 32) der Gleichrichter-Spannungserhöherstufe (70, 85) die einphasige Spannung (Vₐ) über zwei erste, in Reihe betriebene Wicklungen (E1, E2) des Motors (61) erhält und die Mittenanzapfung (C) des Unterbrecherzweiges (33) der Spannungserniedrigungsstufe (71, 86) mit der Batterie (10) über eine dritte Wicklung (E3) des Motors verbunden ist.

6. System (80) nach Anspruch 2 oder 3, **dadurch gekennzeichnet, dass** im Funktionsmodus Stromrichter die Mittenanzapfung (A, B) eines Unterbrecherzweiges (31, 32) der Gleichrichter-Spannungserhöherstufe (70, 85) die einphasige Spannung (Vₐ) über eine erste Wicklung (E1) des Motors erhält und die Mittenanzapfung (C) des Unterbrecherzweiges (33) der Spannungserniedrigungsstufe (71, 86) mit der Batterie (10) über zwei andere, in Reihe betriebene Wicklungen (E2, E3) des Motors verbunden ist.

7. System (80) nach einem der vorangegangenen Ansprüche, **dadurch gekennzeichnet, dass** die Schaltung Gleichrichter-Spannungserhöher (70, 85) in der Weise gesteuert wird (90, 100), dass ein sinusförmiger Strom (Iₑ) in Phase mit der besagten einphasigen Spannung (Vₐ) aufgenommen wird.

8. System nach einem der vorangegangenen Ansprüche, bei dem jeder der besagten Unterbrecherzweige (31, 32, 33) mindestens zwei Unterbrechermittel (T_{A1}/D_{A1}, T_{A2}/D_{A2}, T_{B1}/D_{B1}, T_{B2}/D_{B2}, T_{C1}/D_{C1}, T_{C2}/D_{C2}) in Reihenschaltung enthält, **dadurch gekennzeichnet, dass** die Unterbrechermittel der Unterbrecherzweige (31, 32) der Gleichrichter-Spannungserhöherstufe in abwechselnder Folge leitend gemacht werden, um die Dissipation der Leistung zu verteilen.

9. System nach Anspruch 8, bei dem jedes Unterbrechermittel einen Unterbrecher (T_{A1}, T_{A2}, T_{B1}, T_{B2}, T_{C1}, T_{C2}) und eine parallel geschaltete Diode (D_{A1}, D_{A2}, D_{B1}, D_{B2}, D_{C1}, D_{C2}) enthält, **dadurch gekennzeichnet, dass** die besagten Unterbrecher (T_{A1} - T_{C2}) geschlossen sind, wenn ihre entsprechenden Dioden (D_{A1} - D_{C2}) imstande sind, einen Strom zu leiten, so dass der Wirkungsgrad der Schaltungen Gleichrichter-Spannungserhöher (70, 85) und Gleichrichter-Spannungserniedriger (71, 86) erhöht wird.

## Claims

1. System (80) for recharging, from a single-phase voltage supply (Va), a storage battery (10) of an automotive vehicle equipped with a three-phase electric drive motor (61) with three coils (E1, E2, E3), and an inverter (30) for supplying the three-phase motor (61) with three switch arms (31, 32, 33), comprising means to make said inverter (30) operate as an AC to DC converter with a rectifier-booster stage (70, 85) comprising a first (31) and a second (32) switch arm of the inverter (30), a negative booster stage (71, 86) comprising a third switch arm (33) of the inverter (30) and means (81, 82, 83, 111, 112, 113) for connecting
- the centre points (A, B) of the first (31) and second (32) switch arms to the single-phase voltage source (Va), and
the centre point (D) of the third switch arm (33, 86) to the battery (10) to be supplied with AC voltage (Vout'),
**characterised in that**
- the centre points (A, B) of the first (31) and second (32) switch arms are connected to said single-phase voltage supply (Va) by means of a first inductance (L1) constituted by at least one coil of the three-phase motor (61),
- the centre point of the third switch arm (33) is connected to the battery (10) by means of a second inductance (L2) constituted by at least one coil of said three-phase motor (61) distinct from the coil or coils constituting the first inductance (L1).

2. System (80) according to claim 1, **characterised in that** one of said inductance (L1, L2) is formed by two first coils (E1-E2, E2-E3) of the drive motor (61), the other inductance (L2, L1) being formed by the third coil (E3, E1) of the drive motor (61).

3. System (80) according to claim 2, **characterised in that** one of said inductances (L1, L2) is formed by two first coils (E1-E2, E2-E3) of the drive motor (61) arranged according to opposing coil directions, the other inductance (L1, L2) being formed by the third coil (E3, E1) of the drive motor (61).

4. System (80) according to claim 2 or 3, **characterised in that** in the AC to DC converter operating mode, the centre point (A) of the first switch arm (31) receives the single-phase voltage (Va) by means of a first coil (E1) of the motor, the centre point (B) of the second switch arm (32) receives the single-phase voltage (Va) by means of a second coil (E2) of the motor, and the centre point (C) of the third switch arm (33) is connected to the battery (10) by means of a third coil (E3) of the motor.

5. System (80) according to claim 2 or 3, **characterised in that** in the AC to DC converter operating mode, the centre point (A, B) of a switch arm (31, 32) of the rectifier-booster stage (70, 85) receives the single-phase voltage (Va) by means of two first coils (E1, E2) of the motor (61) arranged in series, and the centre point (C) of the switch arm (33) of the negative booster stage (71, 86) is connected to the battery (10) by means of a third coil (E3) of the motor.

6. System (80) according to claim 2 or 3, **characterised in that** in the AC to DC operating mode, the centre point (A, B) of a switch arm (31, 32) of the rectifier-booster stage (70, 85) receives the single-phase voltage (Va) by means of a first coil (E1) of the motor, and the centre point (C) of the switch arm (33) of the negative booster stage (71, 86) is connected to the battery (10) by means of two other coils (E2, E3) of the motor, arranged in series.

7. System (80) according to one of the preceding claims, **characterised in that** the rectifier-booster circuit (70, 85) is controlled (90, 100) such as to absorb a sinusoidal current (Ie) in phase with said single-phase voltage (Va).

8. System according to one of the preceding claims, in which said switch arms (31, 32, 33) each comprise at least two switching means (TA1/DA1, TA2/DA2, TB1/DB1, TB2/DB2, TC1/DC1, TC2/DC2) in series, **characterised in that** the switching means of the switch arms (31, 32) of the rectifier-booster stage are made conductive in an alternating manner such as to distribute the power dissipation.

9. System according to claim 8, in which each switching means comprise a switch (TA1, TA2, TB1, TB2, TC1, TC2) and a diode (DA1, DA2, DB1, DB2, DC1, DC2) in parallel, **characterised in that** said switches (TA1-TC2) are closed when their corresponding diodes (DA1-DC2) are liable to conduct a current, such as to improve the yield of the rectifier-booster (70, 85) and negative booster (71, 86) circuits.
